Europäisches Patentamt

European Patent Office

Office européen des brevets

(19)

(11) Veröffentlichungsnummer: **0 071 784**
**B1**

(12) **EUROPÄISCHE PATENTSCHRIFT**

(45) Veröffentlichungstag der Patentschrift:
13.11.85

(51) Int. Cl.⁴: **G 01 C 19/38**

(21) Anmeldenummer: **82106319.5**

(22) Anmeldetag: **14.07.82**

(54) **Kreiselgerät mit einem bandaufgehängten Meridiankreisel.**

(30) Priorität: **06.08.81 DE 3131110**

(43) Veröffentlichungstag der Anmeldung:
**16.02.83 Patentblatt 83/7**

(45) Bekanntmachung des Hinweises auf die Patenterteilung:
**13.11.85 Patentblatt 85/46**

(84) Benannte Vertragsstaaten:
**CH DE FR GB LI**

(56) Entgegenhaltungen:
**DE - A - 1 941 808**
**DE - A - 2 008 702**
**DE - A - 2 545 025**
**DE - A - 2 545 026**
**DE - A - 2 618 868**
**DE - A - 2 741 274**
**DE - A - 2 922 411**

**FEINWERKTECHNIK + MICRONIC, 77. Jahrgang, Heft 5,
Juli 1973, Seiten 205-244, München, DE. E. FISCHEL:
"Ein automatischer Meridiankreisel mit sehr kurzer
Messzeit"**

(73) Patentinhaber: **Bodenseewerk Gerätetechnik GmbH,
Alte Nussdorfer Strasse 15 Postfach 1120,
D-7770 Überlingen/Bodensee (DE)**

(72) Erfinder: **Krogmann, Uwe, Phys.-Ing., Zur Äsche 24,
D-7770 Überlingen-Nussdorf (DE)**
Erfinder: **Krebs, Volker, Dr. Dipl.-Ing., Burgbergring 50,
D-7770 Überlingen (DE)**
Erfinder: **Wick, Jost, Dr. Dipl.-Ing., Am Blütenhang 9,
D-7762 Bodman-Ludwigshafen (DE)**

(74) Vertreter: **Weisse, Jürgen, Dipl.-Phys. et al,
Patentanwälte Dipl.-Phys. Jürgen Weisse Dipl.-Chem.
Dr. Rudolf Wolgast Bökenbusch 41 Postfach 11 03 86,
D-5620 Velbert 11 Langenberg (DE)**

## Beschreibung

Die Erfindung betrifft ein Kreiselgerät mit einem bandaufgehängten Meridiankreisel, enthaltend

(a)  ein äußeres Gerätegehäuse,

(b)  ein Kreiselgehäuse, das

   (b$_1$) einen Mast aufweist und
   (b$_2$) mittels eines an dem Mast angebrachten Bandes in dem Gerätegehäuse aufgehängt ist,

(c)  einen Kreisel, der in dem Kreiselgehäuse um eine im wesentlichen horizontale Kreiseldrallachse, umläuft

(d)  einen Abgriff, der auf Auslenkungen des Kreiselgehäuses gegenüber einer Gehäusereferenz des Gehäuses anspricht,

(e)  einen Drehmomenterzeuger, der

   (e$_1$) um die Hochachse auf das Kreiselgehäuse wirkt und
   (e$_2$) von dem verstärkten Signal des Abgriffs als Kompensationssignal beaufschlagt ist, wobei dieses Kompensationssignal proportional dem Kreiselrichtmoment ist, das den Kreisel nach Nord auszurichten trachtet, und damit ein Maß für den Winkel zwischen Kreiseldrallachse und Nord liefert, und

(f)  Signalverarbeitungsmittel mit Rechner zur Unterdrückung von Störungen.

Durch die DE-A 1 941 808 ist ein Kreiselgerät zur Bestimmung der Nordrichtung mit einem an einem Band in einem Gehäuse aufgehängten Meridiankreisel bekannt, bei welchem ein Abgriff zur Erzeugung eines Signals nach Maßgabe der Azumit-Auslenkung des Kreisels gegenüber einer durch die Bandnulllage gegebenen Gehäusereferenz vorgesehen ist. Auf den Meridiankreisel wirkt ein Drehmomenterzeuger, der von dem Signal des Abgriffs über einen hochverstärkenden Verstärker beaufschlagt ist. Dieser Drehmomenterzeuger übt auf den Meridiankreisel ein Drehmoment um die Azimutachse aus, das dem Kreiselrichtmoment, d. h. dem durch die Erddrehung hervorgerufenen, die Kreiseldrallachse nach Nord ausrichtenden Drehmoment entgegenwirkt. Der Meridiankreisel schwingt dann nicht mit seiner Kreiseldrallachse in die Nordrichtung ein, was eine langwierige Prozedur wäre, da der an einem Band aufgehängte Meridiankreisel ein praktisch ungedämpftes Schwingungssystem mit langer Schwingungsperiode darstellt. Vielmehr wird der Meridiankreisel elektrisch an die Gehäusereferenz, d. h. die Bandnullage, gefesselt. Das dazu auf den Meridiankreisel auszuübende Drehmoment ist proportional dem Kreiselrichtmoment und damit bei kleinen Winkeln zwischen Kreiseldrallachse und Nord proportional diesem Winkel. Wenn man bei hinreichend hoher Verstärkung des von dem Abgriff gelieferten Signals auch den Winkel zwischen Kreiseldrallachse und Gehäusereferenz vernachlässigen kann, ist das Drehmoment des Drehmomenterzeugers proportional dem Winkel zwischen Gehäusereferenz und Nord. Kann man voraussetzen, daß der Drehmomenterzeuger linear arbeitet, so liefert das verstärkte Signal des Abgriffs, das auf den Drehmomenterzeuger aufgeschaltet wird, ein Maß für diesen Winkel zwischen Gehäusereferenz und Nord. Dieses Signal kann zur Anzeige der Nordrichtung (DE-B 2 008 702) oder zu Navigationszwecken (DE-B 2 545 025) benutzt werden.

Durch die elektrische Fesselung des Meridiankreisels wird die Schwingungsperiode des Systems wesentlich verkürzt. Es kann dann in einer verglichen mit vorbekannten, sich frei einstellenden bandaufgehängten Meridiankreiseln kurzen Zeit die Nordabweichung, d. h. der Winkel zwischen Gerätereferenz und Nord bestimmt werden.

Um den Einfluß stochastischer Störungen zu eliminieren, ist es bekannt, das auf den Drehmomenterzeuger aufgeschaltet, als Maß für die Nordabweichung dienende Signal auf einen Analog-Digital-Wandler zu geben, der ein diesem Signal entsprechendes Digitalsignal liefert. Dieses Digitalsignal ist auf einen Rechner aufgeschaltet, der zur rekursiven Mittelwertbildung aus den in vorgegebenen Zeitabständen abgetasteten Digitalsignalen eingerichtet ist. Durch die Mittelwertbildung wird der Einfluß von Störungen unterdrückt. Dadurch, daß die Mittelwertbildung rekursiv erfolgt, ist jedoch sichergestellt, daß ein Meßwert relativ schnell zur Verfügung steht (DE-A 2 545 026 und DE-A 2 618 868 sowie US-A 4 075 764). Wenn der Meßwert auch zunächst unter Umständen mit einem Fehler behaftet ist, so wird er jedoch verbessert in dem Maße, wie die Mittelwertbildung erfolgt. Dem Analog-Digital-Wandler ist üblicherweise noch ein Tiefpaßfilter vorgeschaltet.

Durch eine Mittelwertbildung kann der Einfluß stochastischer Störungen eliminiert oder vermindert werden. Es hat sich aber in der Praxis gezeigt, daß bei solchen Kreiselgeräten Störungen auftreten, die nicht stochastischer Natur sind und durch die Mittelwertbildung nicht eliminiert werden können. Diese Störungen stehen insbesondere der Messung in einem bewegten Fahrzeug entgegen.

Der Erfindung liegt die Aufgabe zugrunde, diese nichtstochastischen Störungen zu eliminieren.

2

Erfindungsgemäß wird dies dadurch erreicht, daß

(g)  an dem Gerätegehäuse ein Paar von Beschleunigungsmessern vorgesehen ist, deren Empfindlichkeitsachsen

(g₁) zueinander senkrecht und
(g₂) senkrecht zu dem Band verlaufen, an dem das Kreiselgehäuse aufgehängt ist,

(h)  die Signalverarbeitungsmittel ein in den Rechner eingegebenes Modell für die Störmomentdynamik enthalten, nach welcher Beschleunigungen an der Bandaufhängung in zwei zueinander und zur Richtung des Bandes senkrechten Richtungen sich als Störmoment auf den Kreisel um die Hochachse auswirken,
(i)  die Signale der Beschleunigungsmesser auf das Modell der Störmomentdynamik aufgeschaltet sind und
(j)  die Messung des Kreiselrichtmoments durch das aus dem Modell der Störmomentdynamik gewonnene, das Störmoment darstellende Störmomentsignal korrigierbar ist.

Wenn der Aufhängepunkt des Bandes gleichzeitig in der zur Kreiseldrallachse parallelen Richtung und quer dazu bewegt wird, so tritt durch einen »Gleichrichtereffekt« ein Moment um die Hochachse auf. Dieses »Störmoment« wird nach der Erfindung durch die Beschleunigungsmesser und das Modell bestimmt, und das so erhaltene Störmomentsignal dient zur Korrektur der Messung.

Diese Korrektur kann auf verschiedene Weise erfolgen. Verschiedene Möglichkeiten hierfür sind Gegenstand der Unteransprüche.

Ausführungsbeispiele der Erfindung sind nachstehend unter Bezugnahme auf die zugehörigen Zeichnungen näher erläutert:

Fig. 1 ist eine schematisch-perspektivische Darstellung des mechanischen Aufbaus des Kreiselgeräts.

Fig. 2 ist eine schematisch-perspektivische Darstellung eines bandaufgehängten Kreisels und veranschaulicht das Zustandekommen der hier zu beseitigenden Störmomente.

Fig. 3 zeigt als Blockdiagramm eine erste Art der Signalverarbeitung zur Korrektur der Messung.

Fig. 4 zeigt eine zweite Art der Signalverarbeitung.

Fig. 5 zeigt eine dritte Art der Signalverarbeitung, und

Fig. 6 zeigt eine vierte Art der Signalverarbeitung.

Das Kreiselgerät enthält ein Gerätegehäuse 10, in welchem ein Kreisel in einem Kreiselgehäuse 12 mit einem Mast 14 mittels eines Bandes 16 aufgehängt ist. Das Gerätegehäuse 10 definiert ein Koordinatensystem mit einer Hochachse z und den dazu und zueinander senkrechten Achsen x und y. Eine Gerätereferenz 17 ist eine Richtung parallel zu der y-Achse. Mit 18 ist die im wesentlichen waagerechte Kreiseldrallachse des im Kreiselgehäuse 12 gelagerten Kreisels bezeichnet. Wenn der Kreisel mit seiner Kreiseldrallachse 18 in der durch die y- und die z-Achse bestimmten Ebene liegt, d. h. die Kreiseldrallachse 18 mit der Gehäusereferenz zusammenfällt, ist das Band 16 entspannt. Diese Stellung wird daher als Bandnullage bezeichnet. Die Auslenkung des Kreiselgehäuses 12 gegenüber der Gehäusereferenz 17 wird mittels eines hier als Potentiometer angedeuteten Abgriffs 20 erfaßt. Das Signal des Abgriffs 20 ist über einen hochverstärkenden Verstärker 22 auf einen Drehmomenterzeuger 24 geschaltet.

An dem Gerätegehäuse 10 sitzen im Bereich der Bandaufhängung 26 zwei Beschleunigungsmesser 28 und 30. Die durch einen Pfeil angedeutete Empfindlichkeitsachse des Beschleunigungsmessers 28 ist parallel zu der Gehäusereferenz 17 und damit zu der Kreiseldrallachse 18 in deren Fesselstellung. Die durch einen Pfeil angedeutete Empfindlichkeitsachse des Beschleunigungsmessers 30 ist horizontal und quer zu der Empfindlichkeitsachse des Beschleunigungsmessers 28 und zu der Kreiseldrallachse 18. Die Empfindlichkeitsachsen beider Beschleunigungsmesser 28 und 30 verlaufen senkrecht zur Richtung des Bandes 16.

Es werden im folgenden die nachstehenden Bezeichnungen benutzt:

$\alpha$ = Azimutwinkel zwischen Kreiseldrallachse 18 und Nord,
$\alpha_0$ = Winkel zwischen Gehäusereferenz 17 (oder y) und Nord,
$\alpha_A$ = Auslenkung der Kreiseldrallachse 18 gegenüber der Gehäusereferenz 17,
$\gamma$ = Auslenkung des Mastes 14 aus der Vertikalen in der x–z-Ebene,
m = Masse des Kreisels (mit Kreiselgehäuse 12),
r = Länge des Kreiselpendels vom Schwerpunkt S zum oberen Ende des Mastes 14,
$\ddot{y}$ = Beschleunigung des Schwerpunkts S in y-Richtung,
$a_x^M$ = Beschleunigung, die von dem Beschleunigungsmesser 30 gemessen wird,
$a_y^M$ = Beschleunigung, die von dem Beschleunigungsmesser 28 gemessen wird,
$M_\alpha$ = Störmoment um Hochachse Z,
$M_{\alpha G}$ = Mittelwert des Störmomentsignals,

3

$M_g$ = auf den Drehmomenterzeuger 24 aufgeschaltetes Signal,
$T_D$, $T_1$ = Zeitkonstanten der Übertragungsfunktion des Verstärkers 22,
s = Variable der Laplace-Transformierten.

Signale im Rechner, die eine Meßgröße darstellen, sind mit dem gleichen Symbol wie diese, aber mit einer Schlange (~) bezeichnet. Schätzwerte einer Meßgröße sind durch ein Dach (^) über der Größe gekennzeichnet.

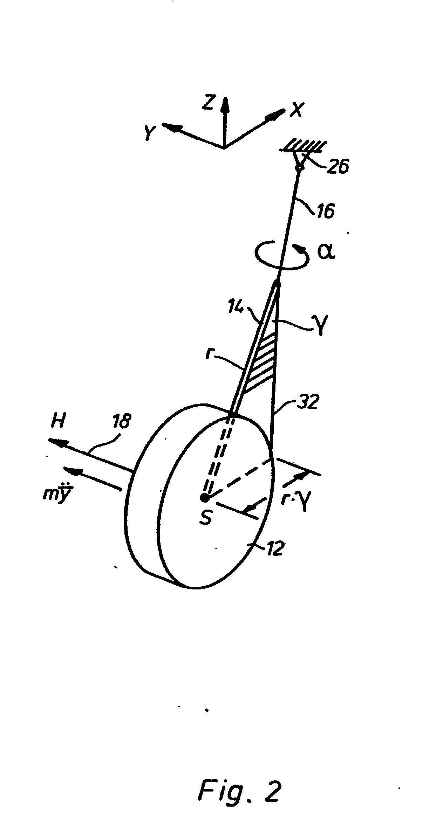

Aus Fig. 2 ist die Wirkung von gleichzeitigen Schwingungen der Bandaufhängung 26 in Richtung der x-Achse und der y-Achse ableitbar. Bewegt sich die Bandaufhängung 26 in Richtung der x-Achse, so tritt eine Auslenkung des Mastes 14 aus der Vertikalen um den Winkel $y$ in der x–z-Ebene auf. Erfolgt gleichzeitig eine Beschleunigung der Bandaufhängung 26 in Richtung der y-Achse, so tritt am Schwerpunkt S des Kreisels und Kreiselgehäuses 12 eine Beschleunigungskraft mÿ auf. Diese Beschleunigungskraft wirkt an dem Hebelarm r·y und erzeugt um die Hochachse ein Moment

$$M_\alpha = -m\ddot{y} \cdot r \cdot y \,.$$

Es sei einmal angenommen, daß die Bewegungen der Aufhängung 26 sowohl in Richtung der x-Achse als auch in Richtung der y-Achse harmonische Schwingungen sind. Es ist dann nach einer halben Schwingungsperiode die Bandaufhängung 26 in Richtung der x-Achse nach der entgegengesetzten Seite (nach vorn in Fig. 2) ausgelenkt. Dementsprechend befindet sich dann der Schwerpunkt S auf der entgegengesetzten Seite der durch das obere Ende des Mastes 14 gehenden Vertikalen 32 (hinter dieser in Fig. 2). Aber auch die Beschleunigung ÿ in Richtung der y-Achse ist gegenphasig zu der in Fig. 2 dargestellten Richtung. Es ergibt sich somit in beiden Fällen ein Moment um die Hochachse, das in vorliegendem Fall von oben in Fig. 2 gesehen im Uhrzeigersinn wirkt. Es tritt ein »Gleichrichtereffekt« ein, durch den auch bei harmonischen Schwingungen ein Drehmoment um die Hochachse ständig in einer Richtung wirksam ist.

Der Einfluß dieser Störmomente soll eliminiert werden.

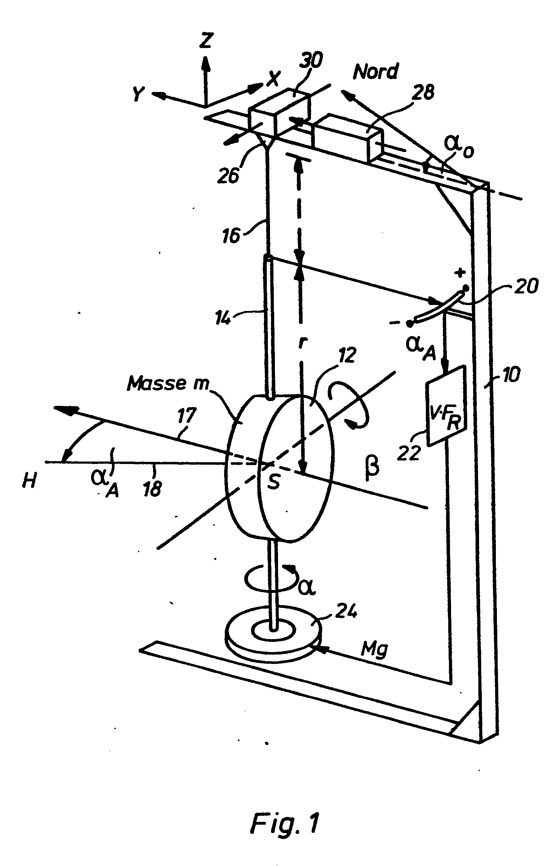

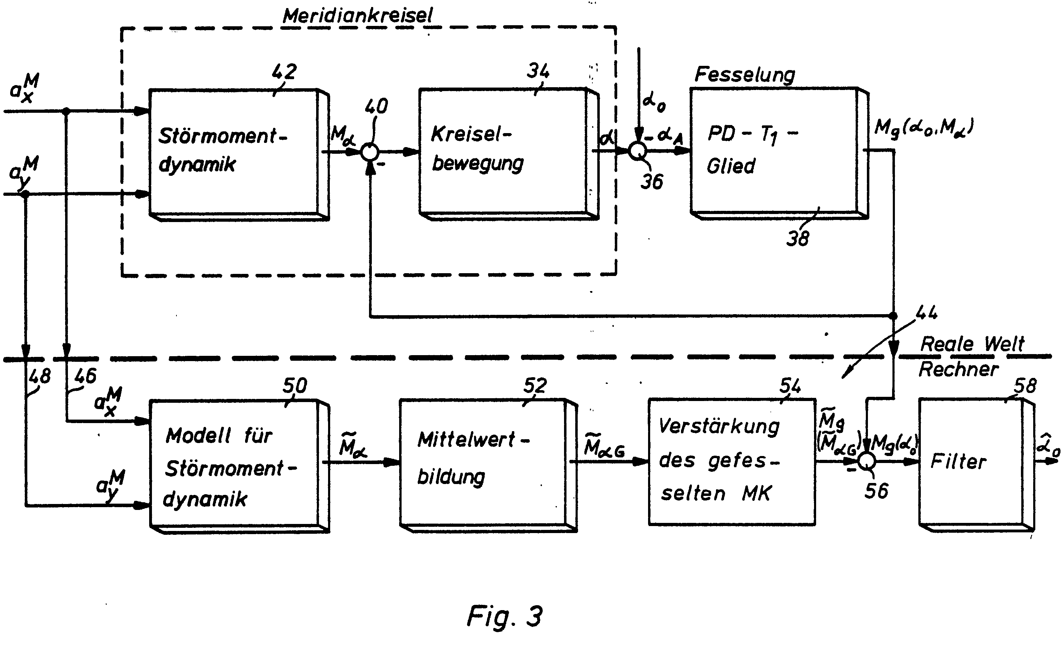

In den Fig. 3 bis 6 ist im oberen Teil, als »REALE WELT« bezeichnet, ein Blockdiagramm dargestellt, welches das Verhalten des in Fig. 1 dargestellten Kreiselgerätes veranschaulicht. In den unteren, mit »RECHNER« bezeichneten Teilen der Fig. 3 bis 6 sind die verschiedenen Möglichkeiten der Signalverarbeitung dargestellt, durch die der Einfluß der geschilderten Störmomente eliminiert wird.

In Fig. 3 stellt Block 34 die Kreiselbewegung dar, die im Azimut zu einem Winkel $\alpha$ führt. Bei Abweichung des Kreiselgehäuses 12 von der Gerätereferenz 17, die mit der Nordrichtung den Winkel $\alpha_0$ bildet, liefert der Abgriff 20 das Signal $\alpha_A$. Das ist durch einen Summierpunkt 36 dargestellt. Das Signal $\alpha_A$ wird durch den Verstärker 22, dargestellt durch Block 38, verstärkt.

Das Zeitverhalten des Verstärkers ist durch eine Übertragungsfunktion

$$V \cdot \frac{1 + T_D s}{1 + T_1 s}$$

dargestellt. Der Verstärker 22 liefert das Signal Mg, das von $\alpha_0$ abhängt. Dieses Signal wird auf den Eingang des Blocks 34 zurückgeführt und mit negativem Vorzeichen an einem Summierpunkt 40 wirksam. Das symbolisiert die Fesselung des Kreisels an die Gehäusereferenz 17 durch den Drehmomenterzeuger 24.

An der Bandaufhängung 26 sind in Richtung der x-Achse und in Richtung der y-Achse Beschleunigungen $a_x^M$ bzw. $a_y^M$ wirksam. Diese Beschleunigungen $a_x^M$ und $a_y^M$ erzeugen infolge der oben im Zusammenhang mit Fig. 2 erläuterten Störmomentdynamik, dargestellt durch Block 42, ein Störmoment $M_\alpha$, das an dem Kreisel um die Hochachse wirksam wird. Das ist durch Addition des Moments $M_\alpha$ zu dem Moment Mg des Drehmomenterzeugers 24 im Summierpunkt 40 angedeutet. Dieses Störmoment $M_\alpha$ beeinflußt die Bewegung des Kreisels, weshalb das Signal Mg nicht nur von $\alpha_0$, sondern auch von $M_\alpha$ abhängt.

Die Beschleunigungen $a_x^M$ und $a_y^M$ werden durch die Beschleunigungsmesser 30 bzw. 28 gemessen. Die Beschleunigungsmessersignale werden einem Rechner 44 zugeführt. Das ist durch die Linie 46 und 48 angedeutet. Der Rechner 44 enthält ein Modell der Störmomentdynamik, das durch einen Block 50 dargestellt ist. Auf dieses Modell werden die Beschleunigungsmessersignale $a_x^M$ und $a_y^M$ aufgeschaltet. Es liefert ein Störmomentsignal $\tilde{M}_\alpha$, das dem Störmoment $M_\alpha$ entspricht.

Von diesem Störmoment interessiert praktisch nur der »Gleichanteil«, der durch den geschilderten Gleichrichtereffekt nur in einer Richtung wirkt und dadurch die Messung verfälscht. Es wird daher im Rechner 44, wie durch Block 52 dargestellt, der Mittelwert $\tilde{M}_{\alpha G}$ des Störmomentsignals $\tilde{M}_\alpha$ gebildet. Dieses Störmoment-Mittelwertsignal $\tilde{M}_{\alpha G}$ wurde mit einem die Verstärkung des Drehmomenterzeugers 24 berücksichtigenden Faktor multipliziert, wie durch Block 54 dargestellt. Dadurch wird ein Signal Mg ($\alpha_0$, $\tilde{M}_{\alpha G}$) erzeugt, das mit dem auf den Drehmomenterzeuger 24 geschalteten, von dem Störmoment $M_\alpha$ beeinflußten »Kompensationssignal« Mg ($\alpha_0$, $M_\alpha$) vergleichbar ist. Es sind Mittel zur Subtraktion des so erhaltenen Signals $\tilde{M}$g ($M_{\alpha G}$) von dem Kompensationssignal Mg ($\alpha_0$, $M_\alpha$) vorgesehen, das ebenfalls auf den Rechner 44 geschaltet wird. Diese Mittel zur Subtraktion sind durch den Summierpunkt 56 in Fig. 3 dargestellt. An diesem Summierpunkt 56 ergibt sich ein hinsichtlich der Störmomente korrigiertes Ausgangssignal Mg ($\alpha_0$). Dieses Ausgangssignal Mg ($\alpha_0$) wird auf ein Filter 58 geschaltet, beispielsweise ein Mittelwertfilter nach US-PS 4 075 764, welches ein Ausgangssignal $\hat{\alpha}_0$ liefert. Dieses Ausgangssignal ist ein Schätzwert für den Winkel zwischen der Gehäusereferenz 17 und Nord.

Bei der Ausführungsform nach Fig. 3 wirkt sich das Störmoment $M_\alpha$ real auf die Bewegung des Kreisels aus. Sein Einfluß wird im Rechner 44 bei der Signalverarbeitung berücksichtigt. Dabei wird also nicht jede Variation des Störmoments kompensiert, sondern nur der in die Messung eingehende »Gleichanteil«. Man kann von einer »statischen Kompensation« des Gleichrichtereffekts sprechen.

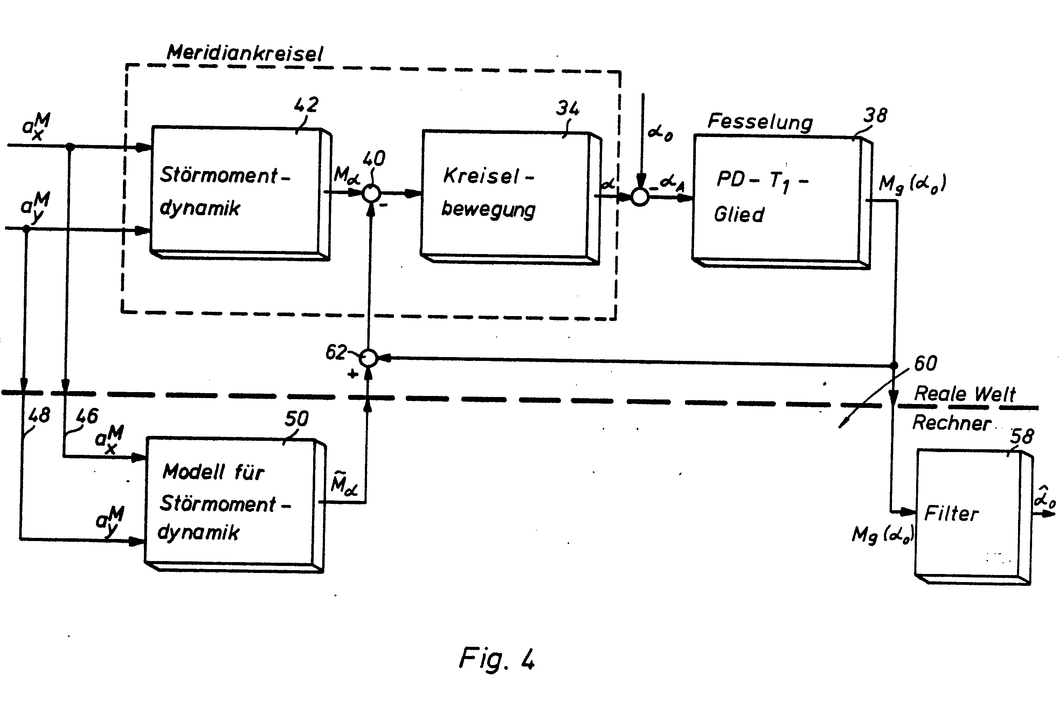

Bei der Ausführung nach Fig. 4 erfolgt eine Störgrößenaufschaltung im Fesselkreis.

Die Darstellung der »realen Welt« des Kreiselgeräts ist die gleiche wie in Fig. 3. Entsprechende Teile sind mit den gleichen Bezugszeichen versehen wie dort. Es wird auch im Rechner 60 in gleicher Weise wie in Fig. 3 aus den Beschleunigungsmessersignalen $a_x^M$, $a_y^M$ und einem Modell 50 für die Störmomentdynamik ein Störmomentsignal $\tilde{M}_\alpha$ gewonnen. Dieses Störmomentsignal $\tilde{M}_\alpha$ wird jedoch hier in einem Summierpunkt 62 dem Kompensationssignal Mg ($\alpha_0$) des Fesselkreises überlagert, das auf den Drehmomenterzeuger 24 geschaltet ist. Das Störmomentsignal $\tilde{M}_\alpha$ wird daher nicht nur rechnerisch berücksichtigt, sondern es greift in die Bewegung des realen Kreiselgeräts ein und wirkt dem real wirksamen Störmoment $M_\alpha$ über den Drehmomenterzeuger 24 entgegen. Die Bewegung des Kreisels und das Kompensationssignal Mg enthalten so von vornherein keine durch das Störmoment hervorgerufenen Anteile. Dieses Kompensationssignal Mg ($\alpha_0$) wird wieder auf ein Filter 58 aufgeschaltet.

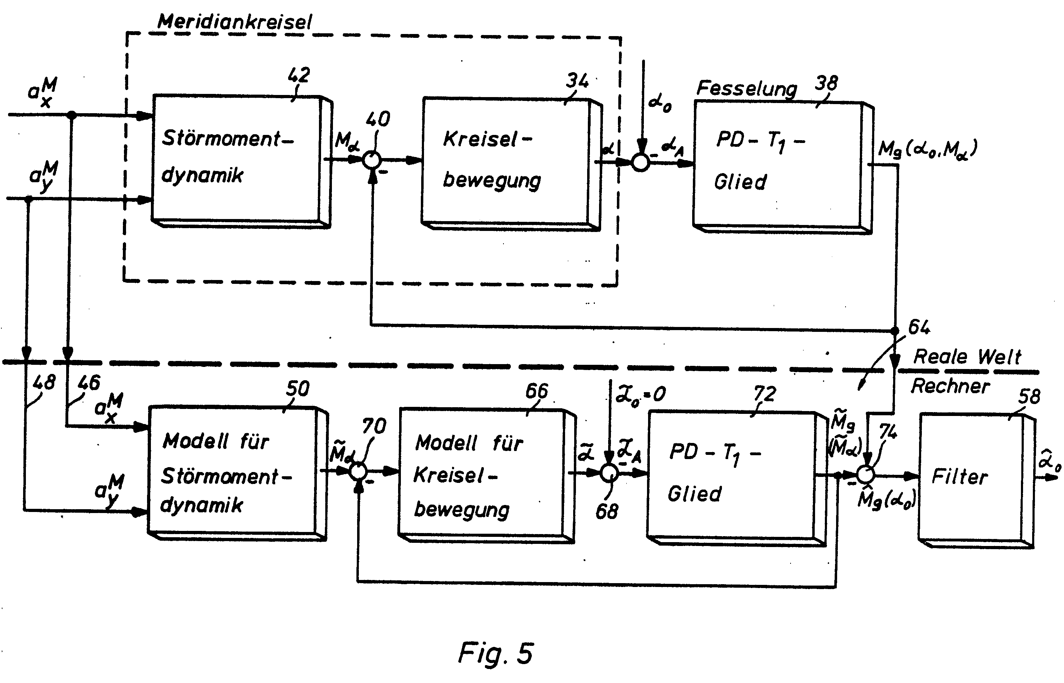

Bei der Ausführungsform nach Fig. 5 erfolgt eine dynamische Kompensation des Störmoments $M_\alpha$ im Rechner 64, d. h. es wird nicht nur der Einfluß des Gleichanteils des Störmoments kompensiert, sondern jeder Momentanwert. Auch hier ist die Darstellung der »realen Welt« des Kreiselgerätes die gleiche wie in Fig. 3 und 4. In der gleichen Weise wie dort enthält der Rechner 64 ein Modell 50 für die Störmomentdynamik, auf das die Beschleunigungsmessersignale $a_x^M$ und $a_y^M$ aufgeschaltet sind und das ein Störmomentsignal $\tilde{M}_\alpha$ liefert.

Der Rechner 64 enthält jedoch auch ein Modell 66 für die Kreiselbewegung, das ein Ausgangssignal $\tilde{\alpha}$ liefert. Als »Gerätereferenzsignal« wird jedoch im Summierpunkt 68 das Signal $\tilde{\alpha}_0 = 0$ angesetzt. Es wird in dem Modell angenommen, daß die Gerätereferenz nach Nord ausgerichtet ist, so daß der Drehmomenterzeuger mit dem rückgeführten Kompensationssignal, der im Modell durch den Summierpunkt 70 gegeben ist, nicht das Kreiselrichtmoment, sondern nur das Störmoment zu kompensieren braucht. Das am Summierpunkt 68 erhaltene Signal $\tilde{\alpha}_A$ wird auf ein Filter 72 gegeben, das die gleiche Übertragungsfunktion wie der Verstärker 22 hat. Das Ausgangssignal $\tilde{Mg}$ ($\tilde{M}_\alpha$) des Filters 72 entspricht im Modell demjenigen Signal, das auf den Drehmomenterzeuger 24 in jedem Augenblick aufgeschaltet werden müßte, um das Störmoment $M_\alpha$ zu kompensieren.

Dieses Signal $\tilde{Mg}$ ($\tilde{M}_\alpha$) wird im Summierpunkt 74 von dem tatsächlich auf den Drehmomenterzeuger 24 aufgeschalteten Kompensationssignal subtrahiert. Es ergibt sich dann ein von den Störmomenten $M_\alpha$ unbeeinflußtes Signal $\hat{Mg}$ ($\alpha_0$). Dieses Signal wird auf ein Filter 58 ähnlich Fig. 3 und 4 geschaltet, welches einen Schätzwert $\hat{\alpha}_0$ für den Winkel zwischen Gerätereferenz 17 und Nord liefert.

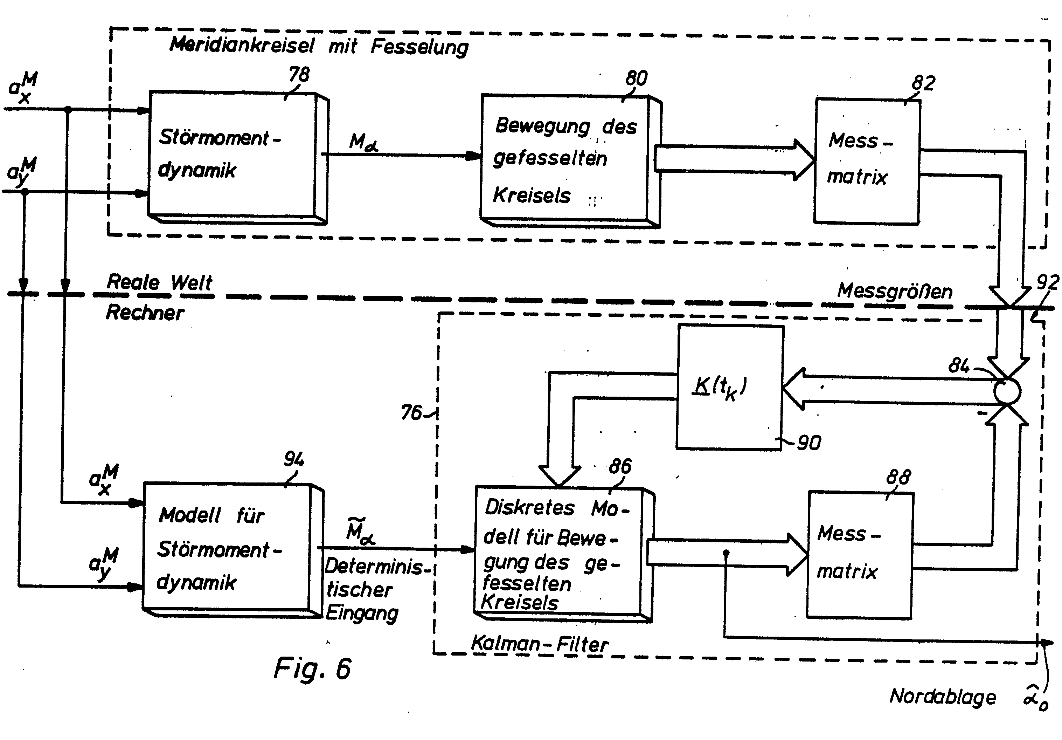

Bei der Ausführungsform nach Fig. 6 ist ein Kalman-Filter 76 vorgesehen.

Die reale Welt des Kreiselgeräts ist dargestellt durch einen Block 78, der (wie Block 42) die Störmomentdynamik des Systems symbolisiert, nach welcher die Beschleunigung $a_x^M$ und $a_y^M$ zu einem Störmoment $M_\alpha$ führten. Ein Block 80 stellt die Bewegung des gefesselten Kreisels von Fig. 1 dar. Es ergeben sich Meßgrößen (ggf. nur eine Meßgröße), wie durch einen Block 82 »Meßmatrix« dargestellt ist. Diese Meßgrößen werden im Kalman-Filter 76 bei 84 mit Schätzwerten dieser Meßgrößen verglichen. Diese Schätzwerte werden von einem diskreten Modell 86 für die Bewegung des gefesselten Kreisels geliefert, wie durch den Block 88 »Meßmatrix« angedeutet ist. Die Differenzen der Meßgrößen und der Schätzwerte werden multipliziert mit zeitabhängigen Faktoren K ($t_k$), die durch Block 90 dargestellt sind, auf das Modell 86 aufgeschaltet und verändern dessen Parameter so lange, bis die Differenzen verschwinden.

Das Kalman-Filter 76 kann als Filtereingangsgröße die Differenz des Kompensationssignals Mg und seines Schätzwertes $\hat{Mg}$ sowie ggf. die Differenz der Abweichung $\alpha_A$ des Kreisels von der Gehäusereferenz und des Schätzwertes $\hat{\alpha}_A$ dieser Abweichung benutzen.

Wie bei den anderen Ausführungsbeispielen enthält der Rechner 92 weiterhin ein Modell 94 für die Störmomentdynamik, auf welches die Beschleunigungsmessersignale $a_x^M$ und $a_y^M$ aufgeschaltet sind und das ein Störmomentsignal $\tilde{M}_\alpha$ liefert. Dieses Störmomentsignal $\tilde{M}_\alpha$ ist als deterministischer Eingang auf das Modell 86 für die Bewegung des gefesselten Kreisels aufgeschaltet.

Der Winkel $\alpha_0$ wird als Schätzwert $\hat{\alpha}_0$ an dem Modell 86 abgenommen.

**0 071 784**

**Patentansprüche**

1. Kreiselgerät mit einem bandaufgehängten Meridiankreisel, enthaltend

(a) ein äußeres Gerätegehäuse (10),
(b) ein Kreiselgehäuse (12), das

(b$_1$) einen Mast (14) aufweist und
(b$_2$) mittels eines an dem Mast (14) angebrachten Bandes (16) in dem Gerätegehäuse (10) aufgehängt ist,

(c) einen Kreisel, der in dem Kreiselgehäuse (12) um eine im wesentlichen horizontale Kreiseldrallachse (18), umläuft
(d) einen Abgriff (10), der auf Auslenkungen des Kreiselgehäuses (12) gegenüber einer Gehäusereferenz (17) des Gerätegehäuses (10) anspricht,
(e) einen Drehmomenterzeuger (12), der

(e$_1$) um die Hochachse (Z) auf das Kreiselgehäuse (12) wirkt und
(e$_2$) von dem verstärkten Signal des Abgriffs (20) als Kompensationssignal (Mg) beaufschlagt ist, wobei dieses Kompensationssignal proportional dem Kreiselrichtmoment ist, das den Kreisel nach Nord auszurichten trachtet, und damit ein Maß für den Winkel ($\alpha_0$) zwischen Kreiseldrallachse (18) und Nord liefert, und

(f) Signalverarbeitungsmittel mit Rechner (44, 60, 64, 92) zur Unterdrückung von Störungen,

dadurch gekennzeichnet, daß

(g) an dem Gerätegehäuse (10) ein Paar von Beschleunigungsmessern (28, 30) vorgesehen ist, deren Empfindlichkeitsachsen

(g$_1$) zueinander senkrecht und
(g$_2$) senkrecht zu dem Band (16) verlaufen, an dem das Kreiselgehäuse (12) aufgehängt ist,

(h) die Signalverarbeitungsmittel ein in den Rechner (44, 60, 64, 92) eingegebenes Modell (50, 94) für die Störmomentdynamik enthalten, nach welcher Beschleunigungen an der Bandaufhängung (26) in zwei zueinander und zur Richtung des Bandes senkrechten Richtungen (x, y) sich als Störmoment ($M_\alpha$) auf den Kreisel um die Hochachse (Z) auswirken,
(i) die Signale ($a_x^M$, $a_y^M$) der Beschleunigungsmesser (30 bzw. 28) auf das Modell (50, 94) der Störmomentdynamik aufgeschaltet sind und
(j) die Messung des Kreiselrichtmoments durch das aus dem Modell (50, 94) der Störmomentdynamik gewonnene, das Störmoment darstellende Störmomentsignal korrigierbar ist.

2. Kreiselgerät nach Anspruch 1, gekennzeichnet durch

(a) Mittel (52) zur Bildung des Mittelwerts ($\tilde{M}_{\alpha G}$) des Störmomentsignals ($\tilde{M}_\alpha$),
(b) Mittel (54) zur Multiplikation des Mittelwerts ($\tilde{M}_{\alpha G}$) mit einem die Verstärkung des Drehmomenterzeugers (24) berücksichtigenden Faktor und
(c) Mittel (56) zur Subtraktion des so erhaltenen Signals von dem Kompensationssignal (Mg ($\alpha_0$, $M_\alpha$)) zur Erzeugung eines hinsichtlich der Störmomente korrigierten Ausgangssignals (Mg ($\alpha_0$)).

3. Kreiselgerät nach Anspruch 1, dadurch gekennzeichnet, daß das Störmomentsignal ($\tilde{M}_\alpha$) auf den Drehmomenterzeuger (24) dem tatsächlich wirksamen Störmoment ($M_\alpha$) entgegengerichtet aufgeschaltet ist.

4. Kreiselgerät nach Anspruch 1, dadurch gekennzeichnet, daß

(a) das Störmomentsignal ($\tilde{M}_\alpha$) auf ein die Kreiselbewegung bei Ausrichtung der Gerätereferenz nach Nord nachbildendes Modell (66, 68) aufgeschaltet ist,
(b) das aus diesem Modell (66, 68) der Kreiselbewegung erhaltene Signal ($\tilde{\alpha}_A$) für die Auslenkung des Kreiselgehäuses (12) gegenüber der Gerätereferenz (17) des Gerätegehäuses (10) auf ein Filter (72) geschaltet ist, welches das Zeitverhalten eines Verstärkers (22) für das Signal des Abgriffs (20) wiedergibt, und
(c) das Ausgangssignal ($\tilde{M}g$ ($\tilde{M}_\alpha$)) dieses Filters (72)

(c$_1$) am Eingang (70) des Modells (66) der Kreiselbewegung von dem Störmomentsignal ($\tilde{M}_\alpha$) subtrahiert wird und

6

(c$_2$) von dem auf den Drehmomenterzeuger (24) geschalteten Kompensationssignal (Mg ($\alpha_0$, M$_a$)) subtrahiert wird,

5. Kreiselgerät nach Anspruch 1, dadurch gekennzeichnet, daß

(a) Meßgrößen (Mg, $\alpha_A$) des Kreiselgeräts auf ein Kalman-Filter (76) geschaltet sind, welches

(a$_1$) das System des gefesselten Meridiankreisels als Modell (86) nachbildet und
(a$_2$) auf welches als Filtereingangssignal die Differenz wenigstens einer von dem gefesselten Meridiankreisel gelieferten Meßgröße und eines von dem Kalman-Filter (76) gelieferten Schätzwerts dieser Meßgröße aufgeschaltet ist, und

(b) das Störmomentsignal ($\tilde{M}_a$) als deterministischer Eingang auf das Modell (86) des gefesselten Meridiankreisels aufgeschaltet ist.

## Claims

1. Gyro assembly with a tape suspended meridian gyro, comprising

(a)   an outer assembly housing (10),
(b)   a gyro housing (12), which

(b$_1$) has a mast (14) and
(b$_2$) is suspended in the assembly housing (10) by means of a tape (16) attached to the mast (14),

(c)   a gyro, which rotates about a substantially horizontal spin axis (18) of the gyro in the gyro housing (12),
(d)   a pick-off (20), which responds to deflections of the gyro housing (12) relative to a housing reference (17) of the assembly housing (10),
(e)   a torquer (24),

(e$_1$) which acts on the gyro housing (12) about the vertical craft axis (Z) and
(e$_2$) to which the amplified signal from the pick-off (20) is applied as compensation signal (Mg), this compensation signal being proportional to the gyro directing torque, which tends to align the gyro toward the north, and thus is indicative of the angle ($\alpha_0$) between the spin axis (18) of the gyro and north, and

(f)   signals processing means having a computer (44, 60, 64, 92) for supression of disturbances, characterized in that

(g)   a pair of accelerometers (28, 30) is provided at the assembly housing (10), the axes of sensitivity of which accelerometers

(g$_1$) are mutually orthogonal and
(g$_2$) extend perpendicular to the tape (16), by which the gyro housing (12) is suspended,

(h)   the signal processing means comprise a model (50, 94), input into the computer, (44, 60, 64, 92) of the dynamic response to disturbances, according to which accelerations at the tape suspension (26) in two directions (x, y) mutually orthogonal and perpendicular to the direction of the tape act as disturbing torque (M$_a$) on the gyro about the vertical craft axis (Z),
(i)   the signals (a$_x^M$, a$_y^M$) from the accelerometers (30 and 28, respectively) are applied to the model (50, 94) of the dynamic response to disturbances, and
(j)   the measurement of the gyro directing torque is corrected by the disturbing torque signal obtained from the model (50, 94) of the dynamic response to disturbances and representing the disturbing torque.

2. Gyro assembly as set forth in claim 1, characterized by

(a)   means (52) for forming the average ($\tilde{M}_{aG}$) of the disturbing torque signal ($\tilde{M}_a$),
(b)   means (54) for multiplying the mean value ($\tilde{M}_{aG}$) by a factor taking the amplification of the torquer (24) into account, and

(c) means (56) for subtracting the thus obtained signal from the compensation signal (Mg $(\alpha_0, M_a)$) for providing an output signal (Mg $(\alpha_0)$) corrected for the disturbing torques.

3. Gyro assembly as set forth in claim 1, characterized in that the disturbing torque signal ($\tilde{M}_a$) is applied to the torquer (24) in opposition to the actually effective disturbing torque ($\tilde{M}_a$).

4. Gyro assembly as set forth in claim 1, characterized in that

(a) the disturbing torque signal ($\tilde{M}_a$) is applied to a model (66, 68) simulating the gyro motion when aligning the assembly reference toward the north,

(b) the signal ($\tilde{\alpha}_A$) obtained from this model (66, 68) of the gyro motion for the deflection of the gyro housing (12) relative to the assembly reference (17) of the assembly housing (10) is applied to a filter (72), which represents the transient response of an amplifier (22) for the signal of the pick-off (20), and

(c) the output signal ($\tilde{M}g(\tilde{M}_a)$) of this filter (72)

(c$_1$) is subtracted from the disturbing torque signal ($\tilde{M}_a$) at the input (70) of the model (66) of the gyro motion, and

(c$_2$) is subtracted from compensation signal (Mg $(\alpha_0, M_a)$) applied to the torquer (24).

5. Gyro assembly as set forth in claim 1, characterized in that

(a) measuring quantities (Mg, $\alpha_A$) of the gyro assembly are applied to a Kalman-filter (76),

(a$_1$) which simulates as model (86) the system of the restrained meridian gyro, and

(a$_2$) to which the difference of at least one measuring quantity supplied by the restrained meridian gyro and one estimated value of these measuring quantity supplied by the Kalman-filter (76) is applied as a filter input signal, and

(b) the disturbing torque signal ($\tilde{M}_a$) is applied as deterministic input to the model (86) of the restrained meridian gyro.

## Revendications

1. Appareil gyroscopique pourvu d'un gyroscope méridien suspendu à bande, comprenant

(a) un boitier d'appareil extérieur (10),

(b) un boitier de gyroscope (12),

(b$_1$) qui présente un mât et

(b$_2$) qui est suspendu dans le boitier d'appareil (10) par le moyen d'une bande (16) fixée au mât (14),

(c) un gyroscope qui tourne dans le boitier de gyroscope (12) autour d'un axe de spin du gyroscope (18) essentiellement horizontal,

(d) un capteur (20) qui répond aux déviations du boitier de gyroscope (12) par rapport à une référence (17) du boitier d'appareil (10),

(e) un moteur-couple (24)

(e$_1$) qui agit autour de l'axe vertical (2) sur le boitier de gyroscope (12), et

(e$_2$) auquel est appliqué le signal amplifié du capteur (20) comme signal de compensation (Mg), qui est proportionnel au couple d'alignement du gyroscope qui tend à aligner le gyroscope vers le nord et qui fournit ainsi une mesure pour l'angle ($\alpha_0$) entre l'axe de spin du gyroscope (18) et le nord, et

(f) des moyens de traitement de signal pourvus d'un ordinateur (44, 60, 64, 92) déstinés à supprimer les perturbations,

caractérisé par le fait que

(g) sur le boîtier d'appareil (10) est prévue une paire d'accéléromètres (28, 30) dont les axes de sensibilité sont

(g$_1$) perpendiculaires l'un à l'autre, et

(g$_2$) perpendiculaires à la bande (16) à laquelle le boitier de gyroscope (12) est suspendu,

(h) les moyens de traitement de signal comprennent un modèle (50) pour la dynamique de couple perturbateur introduit dans le calculateur (44, 60, 64, 92) et selon lequel des accélérations à la suspension à bande (26) dans deux directions (x, y) perpendiculaires l'une à l'autre et à la direction de la bande agissent comme couple perturbateur (M$_a$) sur le gyroscope autour de l'axe vertical (Z),

(i) les signaux (a$_x^M$, a$_y^M$) des accéléromètres (30, 28) sont appliqués au modèle (50, 94) de la dynamique de couple perturbateur, et

(j) la mesure du couple d'alignement du gyroscope peut être corrigée par le signal du couple perturbateur obtenu à partir du modèle (50, 94) de la dynamique de couple perturbateur et représentant le couple perturbateur.

2. Appareil gyroscopique selon la revendication 1, caractérisé par

(a) des moyens (52) appelés à former la moyenne ($\tilde{M}_{a\mathrm{G}}$) du signal de couple perturbateur ($\tilde{M}_a$),

(b) des moyens appelés à multiplier la moyenne ($\tilde{M}_{a\mathrm{G}}$) par un facteur tenant compte de l'amplification du monteur couple (24), et

(c) des moyens (56) appelés à soustraire le signal ainsi obtenu du signal de compensation (Mg ($a_0$, M$_a$)) afin d'engendrer un signal de sortie (Mg ($a_0$)) corrigé relativement aux couples perturbateurs.

3. Appareil gyroscopique selon la revendication 1, caractérisé par le fait que le signal de couple perturbateur ($\tilde{M}_a$) est appliqué au moteur-couple (24) dans la direction opposée au couple perturbateur (M$_a$) réellement actif.

4. Appareil gyroscopique selon la revendication 1, caractérisé par le fait que

(a) le signal de couple perturbateur (M$_a$) est appliqué à un modèle (66, 68) reproduisant le mouvement du gyroscope lors de l'alignement de la référence d'appareil vers le nord,

(b) le signal ($\tilde{a}_\mathrm{A}$) obtenu par ce modèle (66, 68) du mouvement du gyroscope, pour la déviation du boitier de gyroscope (12) par rapport à la référence d'appareil (17) du boitier d'appareil (10), est appliqué à un filtre (72) pour le signal du capteur (20), et

(c) le signal de sortie ($\tilde{M}g$ ($\tilde{M}_a$)) de ce filtre (72) est soustrait

(c$_1$) du signal de couple perturbateur ($\tilde{M}_a$) à l'entrée (70) du modèle (66) du mouvement du gyroscope, et

(c$_2$) du signal de compensation (Mg ($a_0$, M$_a$)) appliqué au moteur-couple (24).

5. Appareil gyroscopique selon la revendication 1, caractérisé par le fait que

(a) des grandeurs de mesure (Mg, $a_\mathrm{A}$) de l'appareil de gyroscope sont appliquées à un filtre de Kalman (76)

(a$_1$) qui reproduit comme modèle le système du gyroscope méredien assujetti (86), et

(a$_2$) sur lequel est appliqué comme signal d'entrée du filtre la différence d'au moins une grandeur de mesure fournie par le gyroscope méridien assujetti et d'une valeur estimative de ces instruments de mesure fournie par le filtre de Kalman (76), et

(b) le signal de couple perturbateur ($\tilde{M}_a$) est appliqué comme entrée déterministe au modèle (86) du gyroscope méridien assujetti.

Fig. 1

Fig. 2

Meridiankreisel

$a_x^M$

$a_y^M$

42
Störmomentdynamik

$M_\alpha$

40

34
Kreiselbewegung

$\alpha$

$\alpha_o$

$-\alpha_A$

36

Fesselung

PD – $T_1$ –
Glied

38

$M_g(\alpha_o, M_\alpha)$

44

Reale Welt

Rechner

48   46

$a_x^M$

$a_y^M$

50
Modell für
Störmomentdynamik

$\widetilde{M}_\alpha$

52
Mittelwertbildung

$\widetilde{M}_{\alpha G}$

54
Verstärkung
des gefesselten MK

$\widetilde{M}_g$
$(\widetilde{M}_{\alpha G})$

$M_g(\alpha_o)$

56

58
Filter

$\hat{\alpha}_o$

0 071 784

15

Fig. 3

Fig. 4

Fig. 5

Meridiankreisel mit Fesselung

$a_x^M$

$a_y^M$

Störmomentdynamik
78

$M_\alpha$

Bewegung des
gefesselten
Kreisels
80

Messmatrix
82

Reale Welt
Rechner

Messgrößen
92

$\underline{K}(t_k)$
84

76

90

$a_x^M$

$a_y^M$

Modell für
Störmomentdynamik
94

$\widetilde{M}_\alpha$
Deterministischer
Eingang

Diskretes Modell für Bewegung des gefesselten
Kreisels
86

Messmatrix
88

Kalman-Filter

Fig. 6

Nordablage  $\hat{\alpha}_0$

0 071 784